# EUROPÄISCHE PATENTSCHRIFT

(11) **EP 1 793 149 B1**
(45) Veröffentlichungstag und Bekanntmachung des Hinweises auf die Patenterteilung: **29.06.2011**
(21) Anmeldenummer: 06124873.8
(22) Anmeldetag: 28.11.2006
(51) Int. Cl.: F16K 31/06

(54) **Elektromagnetischer Aktuator**
Electromagnetic actuator
Actionneur électromagnétique

(30) Priorität: 01.12.2005 DE 102005057296
(43) Veröffentlichungstag der Anmeldung: 06.06.2007
(73) Patentinhaber: Schaeffler Technologies GmbH & Co. KG, 91074 Herzogenaurach (DE)
(72) Erfinder: von Schminonsky, Lothar, 91466, Gerhardshofen (DE); Kufner, Andreas, 91052, Erlangen (DE); Schiele, Marcus, 90556, Seukendorf (DE)

(56) Entgegenhaltungen:
- EP-A- 1 544 525
- JP-A- 58 081 281
- JP-A- 59 188 105
- JP-A- 2002 272 080

## Beschreibung

Die Erfindung betrifft einen elektromagnetischen Aktuator mit einem zylindrischen Magnetanker, der in einem hohlzylindrischen und durch einen Boden einseitig verschlossenen Ankerraum eines Spulengehäuses des Aktuators zwischen zwei um einen Hub H beabstandeten Endlagen gleitend gelagert ist und im Bereich der dem Boden nahen Endlage einen zur Dämpfung seiner Bewegung dienenden Druckraum zwischen dem Boden einerseits und einer dem Boden zugewandten ersten Stirnseite des Magnetankers sowie einem als Drossel dienenden Ringspalt andererseits einschließt, wobei zur Bildung des Ringspalts eine Innendichtfläche innerhalb einer im Magnetanker angeordneten Axialbohrung, die ausgehend von der ersten Stirnseite in Richtung einer zweiten Stirnseite des Magnetankers verläuft, und eine zur Innendichtfläche koaxiale Außendichtfläche an einem am Spulengehäuse befestigten Dichtkörper vorgesehen sind und der Druckraum bei veränderlicher Höhe des Ringspalts innerhalb eines im Bereich der dem Boden nahen Endlage verlaufenden Teilabschnitts ΔH des Hubes H des Magnetankers mit ΔH < H gebildet ist.

Die Erfindung betrifft außerdem ein elektromagnetisches Hydraulikventil mit einem derartigen Aktuator.

### Hintergrund der Erfindung

Der in der JP 2002272080 A vorgeschlagene Aktuator ist Teil eines elektromagnetischen Steuerventils mit einem vom Magnetanker betätigten Ventilstößel, dessen Bewegung im Bereich der oberen, dem Boden des Spulengehäuses nahen Endlage gedämpft ist. Hierzu bildet sich in einem Druckraum zwischen dem Boden und der dem Boden zugewandten Stirnseite des Magnetankers ein Überdruck aus, der sich - abgesehen von Leckagen durch den Führungsspalt des Magnetankers - lediglich über einen als Drossel dienenden Ringspalt entlasten kann. Dieser Ringspalt ist zwischen einer durchgehenden Axialbohrung des Magnetankers und einem in der Axialbohrung verlaufenden Schaft des mit dem Magnetanker fest verschraubten Ventilstößels gebildet.

Die folglich starre Ausbildung des Ringspalts kann jedoch zu einigen Nachteilen für den Betrieb des Steuerventils führen. Zum einen wird die Bewegung des Magnetankers während seines gesamten Hubes durch den sich kontinuierlich aufbauenden Differenzdruck im Druckraum gebremst. Dies gilt sowohl für die Bewegung des Magnetankers von der unteren, dem Boden fernen Endlage in die obere Endlage, bei welcher der im Druckraum entstehende Überdruck durch Verdrängen von Fluid über den Ringspalt abgebaut werden muss, als auch für die Bewegung des Magnetankers von der oberen in die untere Endlage, bei welcher der im Druckraum entstehende Unterdruck durch Ansaugen von Fluid über den Ringspalt ausgeglichen werden muss. In beiden Fällen verlangsamen die im Ringspalt auftretenden Strömungsverluste die Bewegung des Magnetankers auch im Bereich zwischen den Endlagen, so dass die Dynamik des Steuerventils aufgrund längerer Umschaltzeiten des Magnetankers zwischen den Endlagen erheblich beeinträchtigt werden kann. Zum anderen ergeben sich durch den starren Ringspalt allenfalls nur stark eingeschränkte Möglichkeiten, die Dämpfungscharakteristik des Magnetankers in Bezug auf seine momentane Position im Aktuator abzustimmen, da lediglich die radiale, über dem Hub jedoch unveränderliche Breite des Ringspalts als Dämpfungsparameter zur Verfügung steht.

Insofern kann die in der zitierten Druckschrift vorgeschlagene Maßnahme zur Bewegungsdämpfung des Magnetankers dessen Dämpfungscharakteristik insbesondere bei sehr schnell und präzise schaltenden Aktuatoren so ungünstig beeinflussen, dass die an diese gestellten Anforderungen hinsichtlich der Umschaltzeiten nicht oder nicht vollständig erfüllbar sind.

Ein elektromagnetisches Hydraulikventil mit einem in der Endlage gedämpften Aktuator der eingangs genannten Art geht aus der als gattungsbildend betrachteten JP 58 081281 A hervor. Die JP 59 188105 A zeigt einen in der Endlage pneumatisch gedämpften Kolben.

### Aufgabe der Erfindung

Der Erfindung liegt daher die Aufgabe zugrunde, diese geschilderten Nachteile zu vermeiden und somit einen elektromagnetischen Aktuator zu schaffen, dessen Magnetanker ohne wesentliche Beeinträchtigung der Schaltdynamik des Aktuators bei gleichzeitiger gezielter Beeinflussbarkeit des Schaltverlaufs bewegungsgedämpft ist.

### Zusammenfassung der Erfindung

Erfindungsgemäß wird diese Aufgabe dadurch gelöst, dass der Ankerraum durch eine das Spulengehäuse auskleidende, den Boden bildende und aus amagnetischem Metall hergestellte Hülse begrenzt ist, an welcher der Dichtkörper vom Boden ausgehend durch Tiefziehen einteilig angeformt ist.

Somit kann die Hülse, die den Magnetanker von unerwünschten elektromagnetischen Kräften abschirmt, gleichzeitig als Dichtkörper eingesetzt werden, so dass der Kosten- und Montageaufwand für ein zusätzliches, als Dichtkörper dienendes Bauteil im Aktuator entfällt.

Für die Abstimmung der Dämpfungscharakteristik des Magnetankers stehen neben der radialen Breite vor allem die über dessen Hub veränderliche Höhe des Ringspalts als Drosselparameter zur Verfügung. Dabei stellen sowohl der Verlauf der Ringspalthöhe als auch deren Lage in Bezug auf die jeweilige Endlage weitgehend voneinander unabhängige Freiheitsgrade zur Optimierung des Bewegungsverlaufs des Magnetankers dar. Wie nachfolgend noch ausgeführt wird, ist beispielsweise auch eine Bewegungsdämpfung lediglich im Bereich einer der Endlagen möglich, wobei der Druckraum dann je nach Bewegungsrichtung des Magnetankers entweder nur als sich über den Ringspalt entlastender Überdruckraum oder nur als über den Ringspalt nachsaugender Unterdruckraum wirksam ist.

Darüber hinaus können die Lage und die Höhe der den Ringspalt bildenden Außendichtfläche am Dichtkörper und der Innendichtfläche innerhalb der Axialbohrung auch so gewählt werden, dass die Bewegungsdämpfung des Magnetankers nicht bis zum endgüttigen Erreichen einer der Endlagen wirksam ist, sondern kurz vor Erreichen der Endlage abgebrochen wird. Dies kann beispielsweise dann von Vorteil sein, wenn in der Endlage ein schneller Druckausgleich im Druckraum erwünscht ist.

Weiterhin ist ein den Aktuator und das Steuerventil umfassendes elektromagnetisches Hydraulikventil mit einem mit dem Spulengehäuse verbundenen Ventilgehäuse vorgesehen. Dabei steht der Magnetanker in Wirkverbindung mit einem im Ventilgehäuse verlaufenden Ventilstößel oder ist Teil dieses Ventilstößels, der die Verbindung zwischen im Ventilgehäuse ausgebildeten Anschlüssen für Hydraulikmittel steuert. Durch die erfindungsgemäße Bewegungsdämpfung des Magnetankers kann dessen Zurückprellen in den Endlagen infolge einer zu hohen Aufsetzgeschwindigkeit und folglich auch die Übertragung dieser unerwünschten Rückbewegung auf den Ventilstößel verhindert werden. Neben Vorteilen hinsichtlich der mechanischen Bauteilbelastung sowie der Geräuschemission des Hydraulikventils führt dies insbesondere zu einer kontrollierten und im wesentlichen schwingungsfreien Bewegung des Ventilstößels.

In einer bevorzugten Ausführung der Erfindung soll das Steuerventil als Sitzventil mit zumindest einem im Ventilgehäuse angeordneten ersten Dichtsitz ausgebildet sein. Dabei steht der Ventilstößel in Wirkverbindung mit zumindest einem ersten Schließkörper, der mit dem ersten Dichtsitz derart korrespondiert, dass der erste Dichtsitz als Axialanschlag dient, welcher den Hub des ersten Schließkörpers in Richtung der dem Boden nahen Endlage des Magnetankers begrenzt. Gleichzeitig sollen der Magnetanker und der Ventilstößel über einander zugewandte Kraftübertragungsflächen in einer in Zugkraftrichtung losen Druckverbindung stehen, wobei für einen Abstand L_{V}, einen Abstand L_{A} und einen Abstand L_{L} gilt: L_{L} > (L_{V}+ L_{A}), wenn - L_{V} der Abstand zwischen einer am ersten Dichtsitz anliegenden Dichtfläche des ersten Schließkörpers und der Kraftübertragungsfläche des Ventilstößels ist;
- L_{A} der Abstand zwischen der Kraftübertragungsfläche des Magnetankers und der ersten Stirnseite des Magnetankers ist und
- L_{L} der Abstand zwischen dem ersten Dichtsitz und dem Boden ist.

Ein solches Abstands- bzw. Bauteillängenverhältnis berücksichtigt Bauteilstreuungen infolge unvermeidlicher Bauteillängentoleranzen und gewährleistet, dass der erste Schließkörper mit seiner Dichtfläche stets vollständig am ersten Dichtsitz anliegt, bevor der Magnetanker die dem Boden nahe liegende Endlage erreicht. Die Innendichtfläche der Axialbohrung und die Außendichtfläche des Dichtkörpers können dann so zueinander positioniert werden, dass die Bewegungsdämpfung zumindest teilweise im Bereich eines Leerhubs des Magnetankers wirksam ist. Dieser Leerhub ergibt sich aus der Differenz L_{L}- (L_{V}+ L_{A}).

Dabei soll in Fortbildung der Erfindung lediglich ein an die dem Boden nahe Endlage des Magnetankers unmittelbar angrenzender Teilabschnitt ΔH mit ΔH ≤ L_{L}-(L_{V}+L_{A}) vorgesehen sein. Das bedeutet, dass die Bewegungsdämpfung des Magnetankers nur im Bereich und bis zum vollständigen Erreichen dieser Endlage und nur innerhalb des vorgenannten Leerhubs des Magnetankers wirksam ist. In diesem Fall setzt die Bewegungsdämpfung des Magnetankers frühestens dann ein, wenn die Dichtfläche des ersten Schließkörper vollständig am ersten Dichtsitz anliegt. Da die Bewegung des Magnetankers bis dahin weitgehend ungedämpft ist, weist das Steuerventil eine Umschaltzeit auf, die derjenigen eines Steuerventils mit ungedämpften Magnetanker entspricht.

Es ist außerdem vorgesehen, dass das Steuerventil als 3/2-Wegeschaltventil ausgebildet ist, das einen stirnseitigen Druckanschluss und jeweils einen radial durch eine Mantelfläche des hohlzylindrischen Ventilgehäuses verlaufenden Arbeilsanschluss und Tankanschluss aufweist. Dabei sind der erste Dichtsitz zwischen dem Druckanschluss und dem Arbeitsanschluss und ein mit einem zweiten Schließkörper korrespondierender zweiter Dichtsitz zwischen dem Arbeitsanschluss und dem Tankanschluss angeordnet. Demzufolge wird bei einem derartigen Hydraulikventil die Bewegung des Magnetankers und des Ventilstößels von der unteren in die obere Endlage durch die am stirnseitigen Druckanschluss anliegende Druckkraft zumindest unterstützt. Im Falle eines ungedämpftern Magnetankers bestünde dann insbesondere das Risiko, dass der Magnetanker in der oberen Endlage prellt und erneut auf dem Ventilstößel aufschlägt, wodurch der erste Schließkörper zu Schwingungen gegenüber dem ersten Dichtsitz angeregt werden würde. Diese Schwingungen können zu einem mehrmalig aufeinander folgenden Verbinden und Trennen des Druck- und des Arbeitsanschlusses führen und unerwünschte Druckschwingungen im Hydrauliksystem und/oder einen nur schleichenden Druckabbau in der Arbeitsleitung zur Folge haben. Erfindungsgemäß lassen sich derartige Störeffekte dadurch vermeiden, dass die Bewegungsdämpfung teilweise oder vollständig im Bereich des Leerhubs des Magnetankers wirksam ist, während die Bewegung des Ventilstößels bis zum Einsetzen der Bewegungsdämpfung zugunsten einer schnellen Umschaltzeit des Steuerventils weitgehend ungedämpft ist.

In einer zweckmäßigen Ausgestaltung des Steuerventils sollen der Magnetanker rohrförmig mit durchgehender Axialbohrung und der Ventilstößel als aus Kunststoff hergestellter und Axialführungsrippen aufweisender Formkörper ausgebildet sein. Dabei zentrieren die Axialführungsrippen den Ventilstößel radial im Ventilgehäuse und liegen mit Axialabsätzen, die die Kraftübertragungsfläche des Ventilstößels bilden und in einen in der Axialbohrung des Magnetankers schwimmend gelagerten Zentrierzapfen übergehen, an der als Kraftübertragungsfläche des Magnetankers dienenden zweiten Stirnseite des Magnetankers an.

Schließlich ist ein den Aktuator und das Steuerventil umfassendes elektromagnetisches Hydraulikventil mit einer bevorzugten Kombination von vorstehend erläuterten Merkmalen vorgesehen.

### Kurze Beschreibung der Zeichnungen

Weitere Merkmale der Erfindung ergeben sich aus der nachfolgenden Beschreibung und aus den Zeichnungen, in denen die Erfindung einerseits prinzipiell und andererseits anhand eines Ausführungsbeispieles vereinfacht dargestellt ist. Dabei sind gleiche oder funktionsgleiche Bauteile mit gleichen Bezugszeichen versehen. Es zeigen:
- Figur 1: einen elektromagnetischen Aktuator mit einem als Überdruckraum ausgebildeten Druckraum;
- Figur 2: einen elektromagnetischen Aktuator mit einem als Unterdruckraum ausgebildeten Druckraum;
- Figur 3: ein Diagramm, bei der die Höhe des Ringspalts über dem Hub des Magnetankers aufgetragen ist;
- Figur 4: einen elektromagnetischen Aktuator im Verbund mit einem hydraulischen 3/2-Wegeschaltventil und
- Figur 5: den Ausschnitt X aus Figur 4 in vergrößerter Darstellung.

### Ausführliche Beschreibung der Zeichnungen

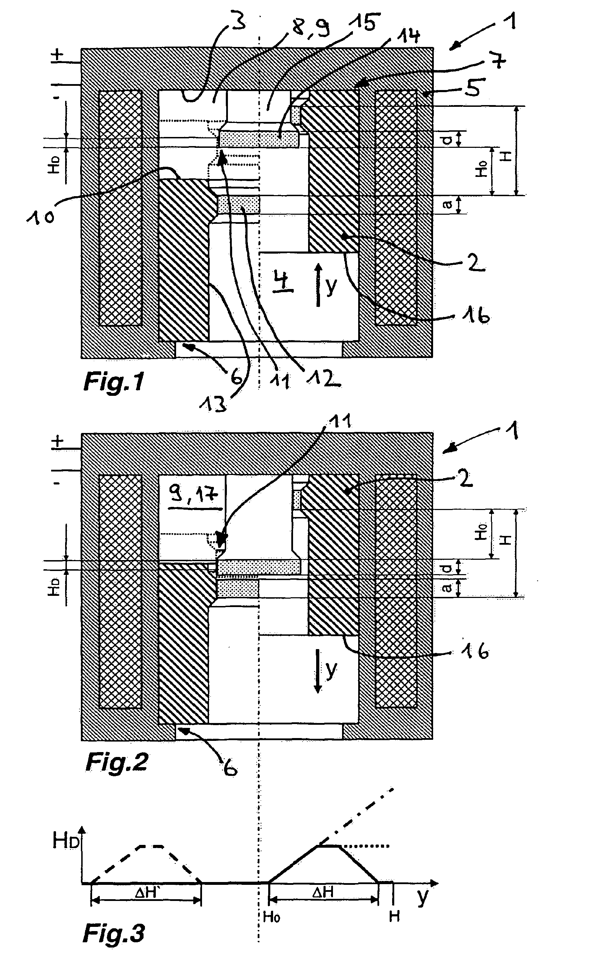

Figur 1 zeigt einen elektromagnetischen Aktuator 1 mit einem zylindrischen Magnetanker 2, der in einem hohlzylindrischen und durch einen Boden 3 einseitig verschlossenen Ankerraum 4 eines Spulengehäuses 5 des Aktuators 1 zwischen zwei um einen Hub H beabstandeten Endlagen gleitend gelagert ist. Für diese und die nachfolgend beschriebenen Figuren ist die vom Boden 3 ferne oder untere Endlage, wie sie links von der Mittellinie des Aktuators 1 dargestellt ist, mit 6 bezeichnet, während die dem Boden 3 nahe oder obere Endlage, wie sie rechts von der Mittellinie dargestellt ist, nachfolgend mit 7 bezeichnet ist. Ferner sind unter dem Begriff des Fluids alle fließfähigen Stoffe und Stoffgemische, also Flüssigkeiten und Gase und deren Gemische zu verstehen.

Bei der Bewegung des Magnetankers 2 in Richtung der oberen Endlage 7 wird im Bereich dieser Endlage 7 ein als Überdruckraum 8 ausgebildeter Druckraum 9 eingeschlossen. Wie aus der links der Mittellinie gepunktet dargestellten Zwischenstellung des Magnetankers 2 hervorgeht, ist der Druckraum 9 einerseits durch den Boden 3 und andererseits durch eine dem Boden 3 zugewandte erste Stirnseite 10 des Magnetankers 2 sowie einen Ringspalt 11 begrenzt. Der Ringspalt 11 ist durch eine Innendichtfläche 12 innerhalb einer im Magnetanker 2 verlaufenden Axialbohrung 13 sowie eine zur Innendichtfläche 12 koaxiale Außendichtfläche 14 an einem vom Boden 3 ausgehenden und am Spulengehäuse 5 befestigten Dichtkörper 15 gebildet. Die Bewegungsdämpfung des Magnetankers 2 beruht auf der Druckbeaufschlagung des im Druckraum 9 befindlichen Fluids, das über den Ringspalt 11 unter Überwindung eines Drosselwiderstandes in Richtung einer dem Boden 3 abgewandten zweiten Stirnseite 16 des Magnetankers 2 verdrängt wird. Da sich jedoch der Magnetanker 2 und der Dichtkörper 15 während des Hubes H des Magnetankers 2 relativ zueinander bewegen und in der unteren Endlage 6 des Magnetankers 2 die Innendichtfläche 12 gegenüber der Außendichtfläche 14 um einen dämpfungsfreien Hubabschnitt H₀ beabstandet ist, kann in Verbindung mit einer veränderlichen Höhe H_{D} des Ringspalts 11 eine auf die Hubkoordinate y des Magnetankers 2 abgestimmte Dämpfungscharakteristik vorgenommen werden. Wesentliche Parameter hierfür sind neben dem dämpfungsfreien Hubabschnitt H₀ eine Höhe a der Innendichtfläche 12 und eine Höhe d der Außendichtfläche 14.

Unter Einbeziehung der Figur 3, in der die Höhe H_{D} des Ringspalts 11 über der Hubkoordinate y aufgetragen ist, können nachfolgend beschriebene Dämpfungscharakteristiken eingestellt werden. Ausgehend von der unteren Endlage 6 nimmt die Höhe H_{D} des Ringspalts 11 nach Erreichen des Hubabschnitts H₀ zu. Der anschließende Verlauf der Höhe H_{D}, der neben der radialen Breite des Ringspalts 11 ein Maß für den Dämpfungsgrad ist, hängt von der Höhe a der Innendichtfläche 12 sowie der Höhe d der Außendichtfläche 14 ab. Sofern diese Dichtflächen 12 und 14 gemäß Figur 1 dimensioniert sind, ergibt sich der in Figur 3 dargestellte Verlauf der Höhe H_{D} während eines Teilabschnittes ΔH des Hubes H im Bereich der oberen Endlage 7. Die Länge des Teilabschnitts ΔH entspricht in diesem Fall der Summe aus der Höhe a der Innendichtfläche 12 und der Höhe d der Außendichtfläche 14 und ist so gewählt, dass sich die Dichtflächen 12 und 14 unmittelbar vor Erreichen der oberen Endlage 7 des Magnetankers 2 nicht mehr überdecken. Folglich ist auch die Bewegung des Magnetankers 2 kurz vor der oberen Endlage 7 erneut dämpfungsfrei, da sich der Druckraum 9 aufgrund des dann nicht mehr vorhandenen Ringspalts 11 rasch entlasten kann.

Der in Figur 3 gepunktet dargestellte Verlauf für die Höhe H_{D} des Ringspalts 11 ergibt sich beispielsweise für die Fälle, bei denen entweder die Höhe a oder die Höhe d größer oder gleich der Differenz zwischen dem Hub H und dem Hubabschnitt H₀ ist. Eine derartige Dimensionierung der Höhen a oder d führt demnach zu einer Dämpfungscharakteristik, deren Dämpfungsgrad nach einem Anstieg konstant bleibt. Demgegenüber würde sich der strichpunktierte Verlauf der Höhe H_{D} des Ringspalts 11 für den Fall ergeben, dass sowohl die Höhe a als auch die Höhe d größer oder gleich der Differenz zwischen dem Hub H und dem Hubabschnitt H₀ sind. In diesem Fall würde der Dämpfungsgrad mit der Höhe H_{D} des Ringspalts 11 kontinuierlich ansteigen. Außerdem würde bei beiden vorgenannten Alternativen die Bewegungsdämpfung des Magnetankers 2 bis zum endgültigen Erreichen der oberen Endlage 7 wirksam sein.

Im Gegensatz zu dem in Figur 1 gezeigten Ausführungsbeispiel ist der Druckraum 9 des Aktuators 1 gemäß Figur 2 bei der Bewegung des Magnetankers 2 in Richtung der unteren Endlage 6 als Unterdruckraum 17 wirksam. Auch in diesem Fall wird die Bewegung des Magnetankers 2 nach dem dämpfungsfreien Hubabschnitt H₀ durch Bildung des Ringspalts 11 mit der Höhe H_{D}, wie er sich für die gepunktet dargestellte Zwischenstellung des Magnetankers 2 ergibt, gedämpft. Jedoch beruht hierbei die Bewegungsdämpfung auf dem im Druckraum 9 erzeugten Unterdruck, so dass zum Druckausgleich nunmehr Fluid aus Richtung der zweiten Stirnseite 16 des Magnetankers 2 kommend unter Überwindung des Drosselwiderstands durch den Ringspalt 11 in den Druckraum 9 strömt.

In Analogie zu den die Figur 1 betreffenden Ausführungen lässt sich auch hierbei die Dämpfungscharakteristik über die Gestaltung der Innendichtfläche 12 und der Außendichtfläche 14 abstimmen. Außerdem lassen sich die für Figur 1 und Figur 2 beschriebenen Dämpfungscharakteristiken dahingehend kombinieren, dass die Bewegung des Magnetankers 2 sowohl in der oberen Endlage 7 als auch in der unteren Endlage 6 gedämpft ist. Dies kann beispielsweise dadurch erreicht werden, dass der in Figur 2 dargestellte Dichtkörper 15 um die Außendichtfläche 14 gemäß Figur 1 erweitert wird. Folglich würde auch der in Figur 3 dargestellte Verlauf für die Höhe H_{D} des Ringspalts 11 um den in Figur 3 gestrichelt dargestellten Teilabschnitt ΔH' im Bereich der unteren Endlage 6 bezüglich Figur 1 bzw. der oberen Endlage 7 bezüglich Figur 2 erweitert werden.

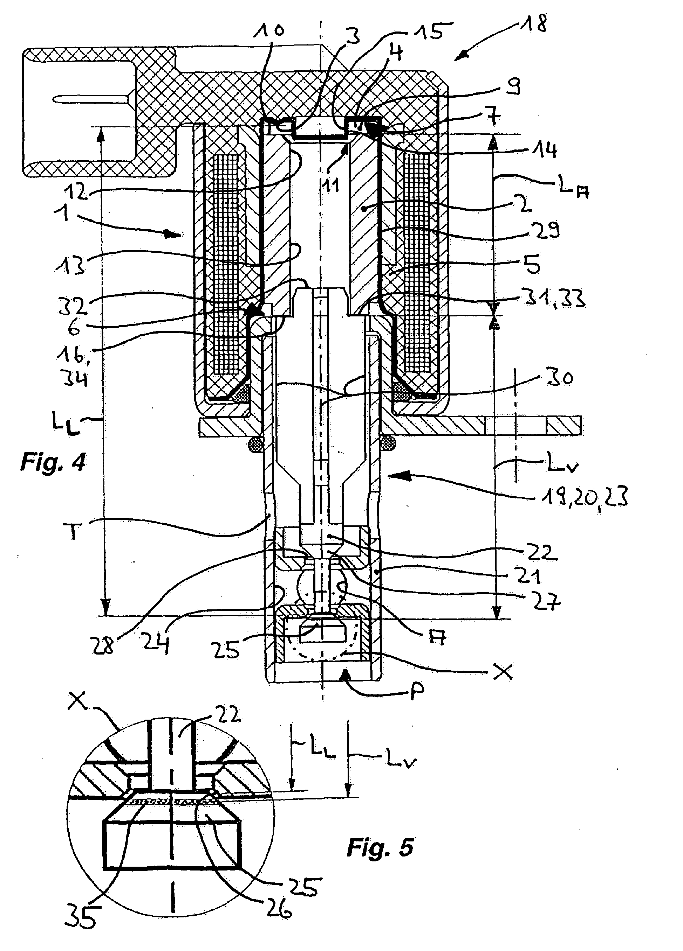

Ein in Figur 4 offenbartes elektromagnetisches Hydraulikventil 18 umfasst den Aktuator 1 und ein als Sitzventil 19 ausgebildetes Steuerventil 20, wobei die Bewegung des Magnetankers 2 basierend auf dem in Figur 1 dargestellten Prinzip im Bereich der oberen Endlage 7 gedämpft ist. Dargestellt ist ein mit dem Spulengehäuse 5 verbundenes hohlzylindrisches Ventilgehäuse 21, in dem ein vom Magnetanker 2 betätigter Ventilstößel 22 die Verbindung zwischen im Ventilgehäuse 21 ausgebildeten Anschlüssen für Hydraulikmittel steuert. Bei diesen Anschlüssen des als 3/2-Wegeschaltventil 23 ausgebildeten und zur Ansteuerung hydraulisch verlagerbarer Stellelemente eines variablen Ventiltriebs einer Brennkraftmaschine geeigneten Steuerventils 20 handelt es sich um einen im Ventilgehäuse 21 stirnseitig angeordneten Druckanschluss P und einen jeweils radial durch eine Mantelfläche 24 des Ventilgehäuses 21 verlaufenden Arbeitsanschluss A und Tankanschluss T.

Wie auch aus der in Figur 5 dargestellten Detailansicht X hervorgeht, wir die Verbindung zwischen den Druckanschlüssen P und A über einen ersten Schließkörper 25 gesteuert, der kegelförmig ausgebildet ist und mit einem im Ventilgehäuse 21 angeordneten ersten Dichtsitz 26 korrespondiert. Dieser dient als Axialanschlag für den ersten Schließkörper 25, so dass dessen Hub und gleichsam der Hub des mit dem ersten Schließkörper 25 fest verbundenen Ventilstößels 22 in Richtung der oberen Endlage 7 des Magnetankers 2 durch den ersten Dichtsitz 26 begrenzt ist. Die Verbindung zwischen den Druckanschlüssen A und T wird über einen zweiten Schließkörper 27 gesteuert, welcher mit einem zweiten Dichtsitz 28 korrespondiert.

Der Ankerraum 4 ist durch eine das Spulengehäuse 5 auskleidende und den Boden 3 bildende Hülse 29 aus amagnetischen Metall begrenzt, die den in der Hülse 29 gleitend gelagerten Magnetanker 2 gegenüber elektromagnetischen Störkräften abschirmt. Dabei ist der vom Boden 3 ausgehende Dichtkörper 15 mit der Außendichtfläche 14 in einem Tiefziehverfahren einteilig an die Hülse 29 angeformt.

Der Ventilstößel 22 ist als Formkörper aus Kunststoff hergestellt und weist Axialführungsrippen 30 auf, die den Ventilstößel 22 im Ventilgehäuse 21 radial zentrieren und die mit Axialabsätzen 31, die in einen in der durchgehenden Axialbohrung 13 des rohrförmig ausgebildeten Magnetankers 2 schwimmend gelagerten Zentrierzapfen 32 übergehen, an der zweiten Stirnseite 16 des Magnetankers 2 anliegen. Die Axialabsätze 31 dienen als Kraftübertragungsfläche 33 des Ventilstößels 22 und die zweite Stirnseite 16 als Kraftübertragungsfläche 34 des Magnetankers 2, der mit dem Ventilstößel 22 in einer in Zugkraftrichtung losen Druckverbindung steht. Dabei gilt für einen Abstand L_{V}, einen Abstand L_{A} und einen Abstand L_{L}: L_{L} > (L_{V}+ L_{A}), wenn
- L_{V} der Abstand zwischen einer am ersten Dichtsitz 26 anliegenden Dichtfläche 35 des ersten Schließkörpers 25 und der Kraftübertragungsfläche 33 des Ventilstößels 22 ist;
- L_{A} der Abstand zwischen der Kraftübertragungsfläche 34 des Magnetankers 2 und der ersten Stirnseite 10 des Magnetankers 2 ist und
- L_{L} der Abstand zwischen dem ersten Dichtsitz 26 und dem Boden 3 ist.

Dieses Abstands- bzw. Bauteillängenverhältnis berücksichtigt unvermeidliche Bauteillängentoleranzen und gewährleistet, dass die Dichtfläche 35 des ersten Schließkörpers 25 stets vollständig am ersten Dichtsitz 26 anliegt, bevor der Magnetanker 2 nach einem Leerhub die obere Endlage 7 erreicht. Der Leerhub ergibt sich aus der Differenz L_{L} - (L_{V}+ L_{A}) und ist mit dem Abstandsmaß zwischen der Kraftübertragungsfläche 33 des Ventilstößels 22 und der Kraftübertragungsfläche 34 des Magnetankers 2 identisch, wenn die Dichtfläche 35 des ersten Schließkörpers 25 am ersten Dichtsitz 26 und der Magnetanker 2 am Boden 3 anliegen.

Bei dem offenbarten Hydraulikventil 18 erfolgt die Bewegung des Magnetankers 2 und des Ventilstößels 22 von der unteren Endlage 6 in Richtung der oberen Endlage 7 lediglich durch die am stirnseitigen Druckanschluss P anliegende und auf den Ventilstößel 22 wirkende Druckkraft. Im Falle eines ungedämpftem Magnetankers bestünde dann das Risiko, dass der Magnetanker in der oberen Endlage 7 am Boden 3 prellt und erneut auf dem Ventilstößel 22 aufschlägt, wodurch der erste Schließkörper 25 zu Schwingungen gegenüber dem ersten Dichtsitz 26 angeregt werden würde. Solche Schwingungen können sich über einen relativ langen Zeitraum erstrecken und zu den eingangs erläuterten Störeffekten hinsichtlich des Druckverlaufs in dem vom Hydraulikventil zu steuernden Hydrauliksystem führen. Insbesondere kann die wiederholt hergestellte Verbindung zwischen dem Druckanschluss P und dem Arbeitsanschluss A zu einem schleichenden, die Verlagerungsdynamik der Stellelemente des Ventiltriebs erheblich beeinträchtigenden Druckabbau am Arbeitsanschluss A mit der Folge von Fehlstellungen der hydraulisch verlagerbaren Stellelemente des Ventiltriebs führen.

Dies wird durch die nachfolgend beschriebene Dämpfungscharakteristik des Hydraulikventils 18 verhindert. Der den Druckraum 9 begrenzende Ringspalt 11 wird von der Innendichtfläche 12 der Axialbohrung 13 und der Außendichtfläche 14 des Dichtkörpers 15 erst dann gebildet, wenn die Dichtfläche 35 des ersten Schließkörpers 25 des Ventilstößels 22 bereits am ersten Dichtsitz 26 anliegt. Somit liegt der Teilabschnitt ΔH, bei dem die Bewegungsdämpfung des Magnetankers 2 durch teilweises Verdrängen des sich im Druckraum 9 befindlichen Öl-Luftgemisches über den Ringspalt 11 erfolgt, vollständig innerhalb des vorgenannten Leerhubs L_{L} - (L_{V}+ L_{A}); es gilt also ΔH ≤ L_{L} - (L_{V}+ L_{A}). Gleichzeitig nimmt die Höhe H_{D} des Ringsspalts 11 während des Teilabschnitts ΔH kontinuierlich zu, so dass der Magnetanker 2 bis zum endgültigen Erreichen der oberen Endlage 7 mit progressiver Dämpfung abgebremst wird.

Im Anschluss daran kann der Magnetanker 2 unter Schwerkrafteinwirkung zum Ventilstößel 22 zurückgleiten und vergleichsweise sanft auf den Axialabsätzen 31 der Axialführungsrippen 30 aufsetzen. Da sich die Innendichtfläche 12 der Axialbohrung 13 und die Außendichtfläche 14 des Dichtkörpers 15 in dieser Position nicht überdecken, ist folglich die Bewegungsdämpfung des Magnetankers 2 auch nur außerhalb des Hubbereichs des Ventilstößels 22 wirksam. Insofern ist auch die Dynamik des Hydraulikventils 18, d.h. die Umschaltzeit des Ventilstößels 22 weder beim Schließvorgang noch beim Öffnungsvorgang, bei denen die Verbindung zwischen dem Druckanschluss P und dem Arbeitsanschluss A geschlossen bzw. geöffnet wird, beeinträchtigt und mit der Dynamik eines Hydraulikventils mit ungedämpftem Magnetanker vergleichbar.

### Liste der Bezugszahlen und -zeichen

- 1: Aktuator
- 2: Magnetanker
- 3: Boden
- 4: Ankerraum
- 5: Spulengehäuse
- 6: untere Endlage
- 7: obere Endlage
- 8: Überdruckraum
- 9: Druckraum
- 10: erste Stirnseite
- 11: Ringspalt
- 12: Innendichtfläche
- 13: Axialbohrung
- 14: Außendichtfläche
- 15: Dichtkörper
- 16: zweite Stirnseite
- 17: Unterdruckraum
- 18: Hydraulikventil
- 19: Sitzventil
- 20: Steuerventil
- 21: Ventilgehäuse
- 22: Ventilstößel
- 23: 3/2-Wegeschaltventil
- 24: Mantelfläche
- 25: erster Schließkörper
- 26: erster Dichtsitz
- 27: zweiter Schließkörper
- 28: zweiter Dichtsitz
- 29: Hülse
- 30: Axialführungsrippe
- 31: Axialabsatz

- 32: Zentrierzapfen
- 33: Kraftübertragungsfläche des Ventilstößels
- 34: Kraftübertragungsfläche des Magnetankers
- 35: Dichtfläche

- H: Hub des Magnetankers
- y: Hubkoordinate
- H_{D}: Höhe des Ringspalts
- H₀: dämpfungsfreier Hubabschnitt
- a: Höhe der Innendichtfläche
- d: Höhe der Außendichtfläche
- ΔH: Teilabschnitt des Hubes H
- ΔH': Teilabschnitt des Hubes H
- P: Druckanschluss
- A: Arbeitsanschluss
- T: Tankanschluss
- L_{V}: Abstand
- L_{A}: Abstand
- L_{L}: Abstand

## Patentansprüche

1. Elektromagnetischer Aktuator mit einem zylindrischen Magnetanker (2), der in einem hohlzylindrischen und durch einen Boden (3) einseitig verschlossenen Ankerraum (4) eines Spulengehäuses (5) des Aktuators (1) zwischen zwei um einen Hub H beabstandeten Endlagen (6, 7) gleitend gelagert ist und im Bereich der dem Boden (3) nahen Endlage (7) einen zur Dämpfung seiner Bewegung dienenden Druckraum (9) zwischen dem Boden (3) einerseits und einer dem Boden (3) zugewandten ersten Stirnseite (10) des Magnetankers (2) sowie einem als Drossel dienenden Ringspalt (11) andererseits einschließt, wobei zur Bildung des Ringspalts (11) eine Innendichtfläche (12) innerhalb einer im Magnetanker (2) angeordneten Axialbohrung (13), die ausgehend von der ersten Stirnseite (10) in Richtung einer zweiten Stirnseite (16) des Magnetankers (2) verläuft, und eine zur Innendichtfläche (12) koaxiale Außendichtfläche (14) an einem am Spulengehäuse (5) befestigten Dichtkörper (15) vorgesehen sind und der Druckraum (9) bei veränderlicher Höhe (H_{D}) des Ringspalts (11) innerhalb eines im Bereich der dem Boden (3) nahen Endlage (7) verlaufenden Teilabschnitts ΔH des Hubes H des Magnetankers (2) mit ΔH < H gebildet ist, **dadurch gekennzeichnet, dass** der Ankerraum (4) durch eine das Spulengehäuse (5) auskleidende, den Boden (3) bildende und aus amagnetischem Metall hergestellte Hülse (29) begrenzt ist, an welcher der Dichtkörper (15) vom Boden (3) ausgehend durch Tiefziehen einteilig angeformt ist.

2. Elektromagnetisches Hydraulikventil umfassend ein Steuerventil (20) und einen Aktuator (1) nach Anspruch 1, **dadurch gekennzeichnet, dass** das Hydraulikventil (18) ein mit dem Spulengehäuse (5) verbundenes Ventilgehäuse (21) aufweist, wobei der Magnetanker (2) in Wirkverbindung mit einem im Ventilgehäuse (21) verlaufenden Ventilstößel (22) steht oder Teil des Ventilstößels (22) ist, welcher die Verbindung zwischen im Ventilgehäuse (21) ausgebildeten Anschlüssen für Hydraulikmittel steuert.

3. Hydraulikventil nach Anspruch 2, **dadurch gekennzeichnet, dass**
• das Steuerventil (20) als Sitzventil (19) mit zumindest einem im Ventilgehäuse (21) angeordneten ersten Dichtsitz (26) ausgebildet ist;
• der Ventilstößel (22) in Wirkverbindung mit zumindest einem ersten Schließkörper (25) steht, der mit dem ersten Dichtsitz (26) derart korrespondiert, dass der erste Dichtsitz (26) als den Hub des ersten Schließkörpers (25) in Richtung der dem Boden (3) nahen Endlage (7) des Magnetankers (2) begrenzender Axialanschlag dient;
• der Magnetanker (2) und der Ventilstößel (22) über einander zugewandte Kraftübertragungsflächen (33, 34) in einer in Zugkraftrichtung losen Druckverbindung stehen, wobei für einen Abstand L_{V}, einen Abstand L_{A} und einen Abstand L_{L} gilt: L_{L}> (L_{V}+ L_{A}), wenn
- L_{V} der Abstand zwischen einer am ersten Dichtsitz (26) anliegenden Dichtfläche (35) des ersten Schließkörpers (25) und der Kraftübertragungsfläche (33) des Ventilstößels (22) ist;
- L_{A} der Abstand zwischen der Kraftübertragungsfläche (34) des Magnetankers (2) und der ersten Stirnseite (10) des Magnetankers (2) ist und
- L_{L} der Abstand zwischen dem ersten Dichtsitz (26) und dem Boden (3) ist.

4. Hydraulikventil nach Anspruch 3, **dadurch gekennzeichnet, dass** der Teilabschnitt ΔH an die dem Boden (3) nahe Endlage (7) des Magnetankers (2) unmittelbar angrenzt, wobei gilt: ΔH ≤ L_{L}-(L_{V}+L_{A}).

5. Hydraulikventil nach Anspruch 3, **dadurch gekennzeichnet, dass**
- das Steuerventil (20) als 3/2-Wegeschaltventil (23) ausgebildet ist, das einen stirnseitigen Druckanschluss (P) und jeweils einen radial durch eine Mantelfläche (24) des hohlzylindrischen Ventilgehäuses (21) verlaufenden Arbeitsanschluss (A) und Tankanschluss (T) aufweist;
- der erste Dichtsitz (26) zwischen dem Druckanschluss (P) und dem Arbeitsanschluss (A) und ein mit einem zweiten Schließkörper (27) korrespondierender zweiter Dichtsitz (28) zwischen dem Arbeitsanschluss (A) und dem Tankanschluss (T) angeordnet sind.

6. Hydraulikventil nach Anspruch 3, **dadurch gekennzeichnet, dass** der Magnetanker (2) rohrförmig mit durchgehender Axialbohrung (13) und der Ventilstößel (22) als aus Kunststoff hergestellter und Axialführungsrippen (30) aufweisender Formkörper ausgebildet sind, welche Axialführungsrippen (30) den Ventilstößel (22) im Ventilgehäuse (21) radial zentrieren und mit Axialabsätzen (31), die die Kraftübertragungsfläche (33) des Ventilstößels (22) bilden und in einen in der Axialbohrung (13) des Magnetankers (2) schwimmend gelagerten Zentrierzapfen (32) übergehen, an der als Kraftübertragungsfläche (34) des Magnetankers (2) dienenden zweiten Stirnseite (16) des Magnetankers (2) anliegen.

## Claims

1. Electromagnetic actuator, with a cylindrical magnet armature (2) which is slideably mounted, between two end positions (6, 7) spaced apart by the amount of a stroke H, in a hollow-cylindrical armature space (4), closed on one side by a bottom (3), of a coil housing (5) of the actuator (1) and which, in the region of the end position (7) near the bottom (3), encloses a pressure space (9), serving for damping the movement of the said magnet armature, between the bottom (3), on the one hand, and a first end face (10), facing the bottom (3), of the magnet armature (2) and also an annular gap (11) serving as a throttle, on the other hand, there being provided for forming the annular gap (11) an inner sealing face (12) within an axial bore (13), which is arranged in the magnet armature (2) and runs from the first end face (10) in the direction of a second end face (16) of the magnet armature (2), and an outer sealing face (14) coaxial to the inner sealing face (12) and located on a sealing body (15) fastened to the coil housing (5), and, in the case of a variable height (H_{D}) of the annular gap (11), the pressure space (9) being formed within a portion ΔH, running in the region of the end position (7) near the bottom (3), of the stroke H of the magnet armature (2), with ΔH < H, **characterized in that** the armature space (4) is delimited by a sleeve (29) which lines the coil housing (5), forms the bottom (3) and is produced from a magnetic metal and on which the sealing body (15) is formed in one part, starting from the bottom (3), by deep-drawing.

2. Electromagnetic hydraulic valve, comprising a control valve (20) and an actuator (1) according to Claim 1, **characterized in that** the hydraulic valve (18) has a valve housing (21) connected to the coil housing (5), the magnet armature (2) being operatively connected to a valve tappet (22) running in the valve housing (21), or being part of the valve tappet (22) which controls the connection between connections for hydraulic medium which are formed in the valve housing (21).

3. Hydraulic valve according to Claim 2, **characterized in that**
• the control valve (20) is designed as a seat valve (19) with at least one first sealing seat (26) arranged in the valve housing (21);
• the valve tappet (22) is operatively connected to at least one first closing body (25) which matches with the first sealing seat (26) in such a way that the first sealing seat (26) serves as an axial stop limiting the stroke of the first closing body (25) in the direction of that end position (7) of the magnet armature (2) which is near the bottom (3);
• the magnetic armature (2) and the valve tappet (22) are pressure-connected loosely in the tensile force direction via force transmission faces (33, 34) facing one another, the following applying to a spacing L_{V}, a spacing L_{A} and a spacing L_{L}: L_{L} > (L_{V} + L_{A}) when,
- L_{V} is the spacing between a sealing face (35), bearing against the first sealing seat (26), of the first closing body (25) and the force transmission face (33) of the valve tappet (22);
- L_{A} is the spacing between the force transmission face (34) of the magnet armature (2) and the first end face (10) of the magnet armature (2), and
- L_{L} is the spacing between the first sealing seat (26) and the bottom (3).

4. Hydraulic valve according to Claim 3, **characterized in that** the portion ΔH is directly adjacent to that end position (7) of the magnetic armature (2) which is near the bottom (3), the following applying: ΔH ≤ L_{L}-(L_{V} + L_{A}).

5. Hydraulic valve according to Claim 3, **characterized in that**
- the control valve (20) is designed as a 3/2-way switching valve (23) which has an end-face pressure connection (P) and in each case a working connection (A) and tank connection (T) running radially through a surface area (24) of the hollow-cylindrical valve housing (21);
- the first sealing seat (26) is arranged between the pressure connection (P) and the working connection (A), and a second sealing seat (28) which matches with a second closing body (27) is arranged between the working connection (A) and the tank connection (T).

6. Hydraulic valve according to Claim 3, **characterized in that** the magnet armature (2) is of tubular design with a continuous axial bore (13) and the valve tappet (22) is designed as a moulding produced from plastic and having axial guide ribs(30), which axial guide ribs (30) centre the valve tappet (22) radially in the valve housing (21) and bear with axial shoulders (31), which form the force transmission face (33) of the valve tappet (22) and merge into a centring tenon (32) mounted floatingly in the axial bore (13) of the magnet armature (2), against the second end face (16), serving as the force transmission face (34) of the magnet armature (2), of the magnet armature (2).

## Revendications

1. Actionneur électromagnétique comprenant un induit magnétique cylindrique (2) d'un boîtier de bobine (5) de l'actionneur (1), lequel induit magnétique est monté dans un espace d'induit (4) cylindrique creux et fermé d'un côté par un fond (3), de manière à pouvoir coulisser entre deux positions de fin de course (6, 7) espacées d'une course H, et qui, dans la région de la position de fin de course (7) proche du fond (3), contient un espace de pression (9) servant à amortir son mouvement, entre le fond (3) d'une part et un premier côté frontal (10) de l'induit magnétique (2) tourné vers le fond (3), et une fente annulaire (11) servant d'étranglement d'autre part, une surface d'étanchéité interne (12) étant prévue pour former la fente annulaire (11) à l'intérieur d'un alésage axial (13) disposé dans l'induit magnétique (2), lequel s'étend depuis le premier côté frontal (10) dans la direction d'un deuxième côté frontal (16) de l'induit magnétique (2), et une surface d'étanchéité externe (14) coaxiale à la surface d'étanchéité interne (12) étant prévue sur un corps d'étanchéité (15) fixé au boîtier de bobine (5), et l'espace de pression (9) étant formé en cas de variation de hauteur (H_{D}) de la fente annulaire (11) à l'intérieur d'une portion partielle ΔH de la course H de l'induit magnétique (2) s'étendant dans la région de la position de fin de course (7) proche du fond (3), avec ΔH < H, **caractérisé en ce que** l'espace d'induit (4) est limité par un manchon (29) doublant le boîtier de bobine (5), formant le fond (3) et constitué d'un métal non magnétique, sur lequel est formé d'une seule pièce par emboutissage profond le corps d'étanchéité (15) à partir du fond (3).

2. Soupape hydraulique électromagnétique comprenant une soupape de commande (20) et un actionneur (1) selon la revendication 1, **caractérisée en ce que** la soupape hydraulique (18) présente un boîtier de soupape (21) connecté au boîtier de bobine (5), l'induit magnétique (2) étant en liaison fonctionnelle avec un poussoir de soupape (22) s'étendant dans le boîtier de soupape (21) ou faisant partie du poussoir de soupape (22), qui commande la connexion entre les raccords de fluide hydraulique réalisés dans le boîtier de soupape (21).

3. Soupape hydraulique selon la revendication 2, **caractérisée en ce que**
- la soupape de commande (20) est réalisée sous forme de soupape à siège (19) avec au moins un premier siège d'étanchéité (26) disposé dans le boîtier de soupape (21) ;
- le poussoir de soupape (22) est en liaison fonctionnelle avec au moins un premier corps de fermeture (25) qui correspond avec le premier siège d'étanchéité (26) de telle sorte que le premier siège d'étanchéité (26) serve de butée axiale limitant la course du premier corps de fermeture (25) dans la direction de la position de fin de course (7) proche du fond (3) de l'induit magnétique (2) ;
- l'induit magnétique (2) et le poussoir de soupape (22) sont en liaison de pression libre dans la direction de la force de traction par le biais de surfaces de transfert de force (33, 34) tournées l'une vers l'autre, où, pour une distance L_{V}, une distance L_{A} et une distance L_{L}, on a : L_{L} > (L_{V} + L_{A}), si
- L_{V} est la distance entre une surface d'étanchéité (35) s'appliquant contre le premier siège d'étanchéité (26) du premier corps de fermeture (25) et la surface de transfert de force (33) du poussoir de soupape (22) ;
- L_{A} est la distance entre la surface de transfert de force (34) de l'induit magnétique (2) et le premier côté frontal (10) de l'induit magnétique (2) et
- L_{L} est la distance entre le premier siège d'étanchéité (26) et le fond (3).

4. Soupape hydraulique selon la revendication 3, **caractérisée en ce que** la portion partielle ΔH est directement adjacente à la position de fin de course (7) proche du fond (3) de l'induit magnétique (2), et l'on a : ΔH ≤ L_{L} - (L_{V} + L_{A}).

5. Soupape hydraulique selon la revendication 3, **caractérisée en ce que**
- la soupape de commande (20) est réalisée sous forme de soupape à 3/2 voies (23), qui présente un raccord de pression côté frontal (P) et à chaque fois un raccord de travail (A) et un raccord de réservoir (T) s'étendant radialement à travers une surface d'enveloppe (24) du boîtier de soupape cylindrique creux (21) ;
- le premier siège d'étanchéité (26) est disposé entre le raccord de pression (P) et le raccord de travail (A) et un deuxième siège d'étanchéité (28) correspondant avec un deuxième corps de fermeture (27) est disposé entre le raccord de travail (A) et le raccord de réservoir (T).

6. Soupape hydraulique selon la revendication 3, **caractérisée en ce que** l'induit magnétique (2) est réalisé sous forme tubulaire avec un alésage axial traversant (13) et le poussoir de soupape (22) est réalisé sous forme de corps moulé fabriqué en plastique et présentant des nervures de guidage axiales (30), lesquelles nervures de guidage axiales (30) centrent radialement le poussoir de soupape (22) dans le boîtier de soupape (21) et s'appliquent, avec des épaulements axiaux (31), qui forment la surface de transfert de force (33) du poussoir de soupape (22) et qui se prolongent dans un tourillon de centrage (32) monté flottant dans l'alésage axial (13) de l'induit magnétique (2), sur le deuxième côté frontal (16) de l'induit magnétique (2) servant de surface de transfert de force (34) de l'induit magnétique (2).
